# EUROPEAN PATENT APPLICATION

(11) **EP 3 382 946 A1**
(43) Date of publication of application: **03.10.2018**
(21) Application number: 17305374.5
(22) Date of filing: 30.03.2017
(51) Int. Cl.: H04L 12/26

(54) **DEVICE AND METHOD FOR PERFORMANCE MONITORING**

(71) Applicant: Thomson Licensing, 92130 Issy-les-Moulineaux (FR)
(72) Inventor: LE MERRER, Erwan, 35576 Cesson Sévigné (FR); CHANDRASHEKAR, Jaideep, LOS ALTOS 94022 (US); NEUMANN, Christoph, 35576 Cesson Sévigné (FR)
(74) Representative: Ståhl, Björn Niclas

(57) **Abstract**

A plurality of watcher devices (110, 111...11 n), such as gateways, in a network (100) measure (S210) network characteristics of a target device, the watchers elect a leader (S220) and send (S230) the measurements to the leader that verifies (S240) the consistency of and concatenates (S250) the measurements, preferably in a predetermined order, before hashing (S260) the concatenation. The resulting hash value is then stored (S270), possibly with identifiers of the watcher devices, in a blockchain maintained by the target device and the concatenation is stored (S280) in a log storage (120)

## Description

### TECHNICAL FIELD

The present disclosure relates generally to network communication and in particular to monitoring of network performances of network devices.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

For reasons of quality of service, it is often desired to monitor devices connected to a network, such as gateways or servers. The quality of service can be negatively affected by problems related to hardware, software or incorrect configuration of a device, but also due to network issues unrelated to the device itself.

However, an operator can have difficulties pinpointing the cause of a problem perceived by a user that uses the device directly (e.g. a server) or indirectly (e.g. a gateway). The user can for example claim that a problem is due to network issues when that user is actually the cause of the perceived problem, such as may be the case when the user configures a device. As can be seen, pinpointing the problem can be particularly difficult when a user complains about a problem that occurred in the past, such as "Last week, the bandwidth was slow."

It will thus be appreciated that there is a desire for a solution that addresses this problem. The present principles provide such a solution.

### SUMMARY OF DISCLOSURE

In a first aspect, the present principles are directed to a first device in a set of devices in a network. The first device comprises an interface configured for communication with other devices in the network and at least one hardware processor configured to measure, via the interface, at least one performance characteristic of a second device in the set of devices to obtain at least one measurement and store a value derived from at least one measurement in a blockchain for measurements for the second device, the blockchain maintained by at least one of the first device and the second device.

Various embodiments of the first aspect include:
- That the blockchain is maintained by at least the second device.
- That the value derived from the at least one measurement is equal to the at least one measurement.
- That the value derived from the at least one measurement is a hash value of the at least one measurement and that the at least one hardware processor is further configured to process the at least one measurement to obtain the hash value. The at least one hardware processor can be further configured to send, via the interface, the at least one measurement for storage in a measurement storage.
- That at least one measurement is obtained using at least one of: ping, traceroute and uploading data to measure bandwidth.
- That at least one hardware processor is configured to obtain and store measurements during each of a plurality of successive time periods.
- That the first device is one of a plurality of devices obtaining measurements for the second device and that the at least one hardware processor is configured to send the at least one measurement to a leader among the devices obtaining measurements for the second device.
- That the first device is a leader among a plurality of devices obtaining measurements for the second device and that the at least one hardware processor is further configured to receive measurements from non-leaders among the plurality of devices obtaining measurements for the second device and concatenate received and obtained measurements, and that the value derived from at least one measurement comprises concatenated measurements or a hash value of concatenated measurements. That at least one hardware processor can be further configured to verify the consistency of received measurements.

In a second aspect, the present principles are directed to a method comprising, at a first device in a set of devices in a network, measuring, by at least one hardware processor via an interface, at least one performance characteristic of a second device in the set of devices to obtain at least one measurement and storing, by the at least one hardware processor, a value derived from the at least one measurement in a blockchain for measurements for the second device, the blockchain maintained by at least one of the first device and the second device.

Various embodiments of the second aspect include:
- That the blockchain is maintained by at least the second device.
- That the value derived from the at least one measurement is a hash value of the at least one measurement and that the method further comprises processing, by least one hardware processor, the at least one measurement to obtain the hash value.

In a third aspect, the present principles are directed to a computer program comprising program code instructions executable by a processor for implementing the steps of a method according to any embodiment of the third aspect.

In a fourth aspect, the present principles are directed to a computer program product which is stored on a non-transitory computer readable medium and comprises program code instructions executable by a processor for implementing the steps of a method according to any embodiment of the third aspect.

### BRIEF DESCRIPTION OF DRAWINGS

Preferred features of the present principles will now be described, by way of non-limiting example, with reference to the accompanying drawings, in which:
Figure 1 illustrates an exemplary system implementing the present principles;
Figure 2 illustrates a monitoring method according to an embodiment of the present principles; and
Figure 3 illustrates a method for verifying monitoring according to preferred embodiment of the present principles.

### DESCRIPTION OF EMBODIMENTS

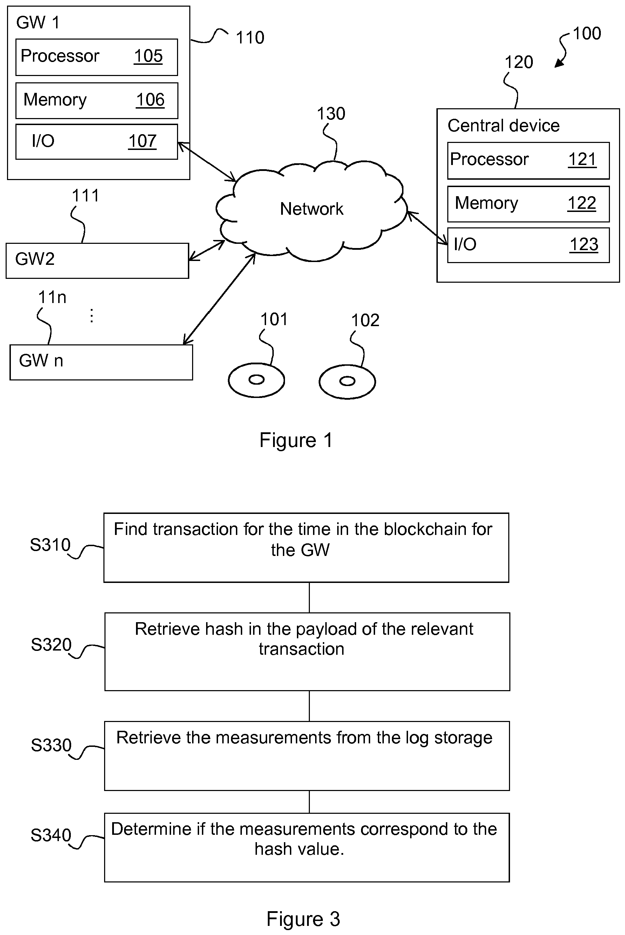

Figure 1 illustrates an exemplary system 100 implementing the present principles in which gateways are used as non-limitative examples of devices. The system 100 comprises a group (also called set) of gateways (GWs) 110, 111, ...11 n, and possibly also a central device 120 operably connected through a network 130, such as for example the Internet.

Although only illustrated for GW 110, each GW 110, 111, ...11n includes at least one hardware processing unit ("processor") 105 configured to execute instructions of a software program, and to monitor other gateways, process measurements and store processed measurements securely. The GWs 110, 111, ...11 n further include memory 106 configured to store the software program and the measurements, before and after processing, and at least one communications interface ("I/O") 107 configured to communicate with other devices through the network 130. The GWs 110, 111, ...11 n can further include user interfaces (not shown) for interaction with a user.

Each GW 110, 111, ...11 n has an identifier that uniquely identifies the GW among the group of GWs. Each GW 110, 111, ...11 n further stores in its memory 106 a number of tokens. These tokens can for example be proofs-of-work (possibly reusable) or an amount of crypto money such as Bitcoins.

The central device 120 comprises at least one hardware processing unit ("processor") 121 configured to process requests for storage and retrieval of measurements. The central device 120 further comprises memory 122 configured to store measurements and at least one communications interface ("I/O") 123 configured to communicate with other devices, in particular receive measurements from the GWs 110, 111, ...11n and send stored measurements to the other devices.

Non-transitory storage media 101, 102 store software programs with instructions that, when executed by a processor, respectively perform the functions of the GWs 110, 111, ...11 n and the central device 120 as further described hereinafter.

The skilled person will appreciate that the illustrated GWs and central device are very simplified for reasons of clarity, and that features such as internal connections and power supplies have been omitted for reasons of clarity.

A GW, for example GW 110, monitors at least one other GW in the group, for example GW 111, but preferably a plurality of GWs. The GW to monitor is identified by at least its identifier, but preferably also by its IP address. The central device 120 can assign the gateways to monitor, but the assignment can also be made by a GW in the group, having access to a list of the GWs of the group or in a peer-to-peer fashion in the group. A GW can thus determine the GWs to monitor. The assignment is preferably at least pseudorandom. In addition, a GW is preferably monitored by a plurality of GWs. Hereinafter the monitoring GW will be called "watcher" and the monitored GW "target".

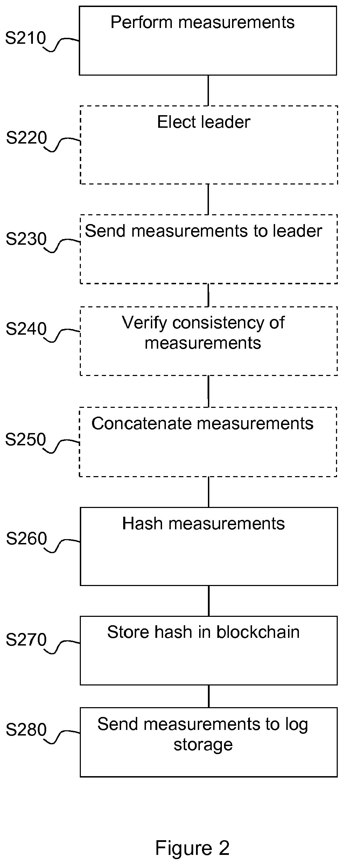

Figure 2 illustrates a monitoring method according to an embodiment of the present principles.

In step S210, the watcher performs measurements of the target. Non-limitative examples of measurements use conventional methods such as ping, traceroute and the upload of data to test the bandwidth to obtain various metrics.

The measurements are preferably performed at a given time, in particular if more than one watcher monitors the same target; that way, it can be easier to compare the measurements. It is also preferred that the measurements are performed at least once in successive time periods (e.g., each hour or each day) to obtain measurements at different times.

The following steps S220-250 are performed only if several watchers monitor the same target.

In step S220, these watchers elect a leader using any suitable conventional leader election protocol.

In step S230, the non-leaders send their measurements (for the time period) to the leader that gathers these measurement.

In step S240, the leader verifies the consistency of the received measurements, e.g., by checking that the measurements are all for the same time period and in the same range (i.e. the same within a given tolerance level). As already mentioned, this can be facilitated by making the measurements at essentially the same time.

In step S250, the leader concatenates the measurements for the target, i.e., its own measurements and those of the non-leaders, to obtain a measurement log. The measurements are preferably concatenated in a predetermined order, such as in increasing order of the identifiers of the watchers.

In step S260, the measurements are hashed to obtain a hash value. Any suitable conventional hash or digest algorithm or equivalent can be used for this purpose. In case of a lone watcher, the lone watcher is the leader by default and thus hashes its own measurements (as already mentioned, steps S220-S250 are not performed with a lone watcher).

In step S270, the watcher or leader stores the hash in a blockchain maintained by the target or by a plurality, possibly all, GWs of the group (preferably including the target). In order to do so, the watcher sends a token (for example a micro payment in crypto money) to the target, with the hash as payload and possibly the identifiers of the watcher(s) that performed the measurements. The blockchain will then store the hash and the date of the transaction. It is noted that the blockchain can be dedicated only to the measurements for the target, but the blockchain can also be dedicated to measurements for a plurality of targets (i.e. GWs).

In step S280, the watcher or leader then sends the measurements, preferably compressed, to a log storage (also called "measurement storage") for storage. The log storage can be located in the central device 120, but it can also be a public File Transfer Protocol (FTP) server, implemented on a cloud storage platform or in the blockchain itself. The log storage can also be distributed over the GWs, for example in a peer-to-peer fashion or by having each target store the measurements related to itself.

In a variant embodiment, the measurements are not hashed, but stored as they are in the blockchain, which also removes the need for a separate log storage. In other words, steps S260 is not performed and steps S270 and S280 are combined.

Figure 3 illustrates a method for verifying monitoring according to preferred embodiment of the present principles.

When someone, for example a user, wants to verify the state of a given GW at a given time, a device (such as a GW, a computer or a smartphone) of a user finds, in step S310, a transaction for the time in the blockchain dedicated to the measurements for the given GW for the given time. The device retrieves the hash, in step S320, in the payload of the relevant transaction, retrieves the measurements from the log storage in step S330, and determines, in step S340, if the hash of the measurement corresponds to the retrieved hash value.

The entity verifying the state of a GW can also be a general Internet Service Provider (ISP) network monitoring service like grenouille.com. To check hosts statuses at a given time, the entity can simply perform the method illustrated in Figure 3.

In a variant, a GW does not monitor other GWs, but monitors its own performances towards given landmarks, such as specific servers. The GW thus performs measurements on its own network performance, hashes the measurements, commits the hash to a blockchain and stores the measurements in a log storage. In this variant, the measurement towards the landmark can also be performed by a set of watchers and an elected leader. The leader aggregates the measurements of the watchers of the set and commits the result (or its hash) in the blockchain. In this variant, the targeted landmark might itself not be part of the blockchain network. Therefore the token is sent to one of the watchers (that can also be the leader or watcher itself).

A reason for the variant is that there are around the world telecommunication regulatory agencies, for example ANATEL in Brazil, that want to enforce a certain level of quality of service (QoS) by ISPs under their jurisdiction. To enforce a given QoS, they conventionally perform measurements that have to be trustworthy and, based on the measurements, find ISPs that fail to provide the required QoS.

A problem for these agencies is that the measurements have to be trustworthy and that they reflect the situation of individual ISP clients. Measurements to known landmarks by probes managed by the agency may not be precise enough, since they may fail to reflect accurately what customers are experiencing.

Using the variant of the present principles, it can thus be possible to monitor the QoS to those landmarks from each gateway of an ISP, which can make it possible for the ISP to prove the agency (or to a given user) that the required QoS is met.

As mentioned, the GWs are non-limitative examples of devices; the present principles can easily be adapted to other devices such as servers.

It will thus be appreciated that the present principles can provide a solution for device monitoring that can provide a robust proof a posteriori to third parties.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A first device (110) in a set of devices (110, 111...11 n) in a network (100), the first device (110) comprising:
an interface (107) configured for communication with other devices in the network; and
at least one hardware processor (105) configured to:
measure, via the interface, at least one performance characteristic of a second device (111...11 n) in the set of devices to obtain at least one measurement; and
store a value derived from the at least one measurement in a blockchain for measurements for the second device.

2. The first device of claim 1, wherein the blockchain is maintained by at least the second device.

3. The first device of claim 1, wherein the value derived from the at least one measurement is equal to the at least one measurement.

4. The first device of claim 1, wherein the value derived from the at least one measurement is a hash value of the at least one measurement and wherein the at least one hardware processor (105) is further configured to process the at least one measurement to obtain the hash value.

5. The first device of claim 4, wherein the at least one hardware processor (105) is further configured to send, via the interface, the at least one measurement for storage in a measurement storage (120).

6. The first device of claim 1, wherein the at least one measurement is obtained using at least one of: ping, traceroute and uploading data to measure bandwidth.

7. The first device of claim 1, wherein the at least one hardware processor (105) is configured to obtain and store measurements during each of a plurality of successive time periods.

8. The first device of claim 1, wherein the first device is one of a plurality of devices obtaining measurements for the second device, wherein the at least one hardware processor (105) is configured to send the at least one measurement to a leader among the devices obtaining measurements for the second device.

9. The first device of claim 1, wherein the first device is a leader among a plurality of devices obtaining measurements for the second device, wherein the at least one hardware processor is further configured to:
receive measurements from non-leaders among the plurality of devices obtaining measurements for the second device; and
concatenate received and obtained measurements;
wherein the value derived from the at least one measurement comprises concatenated measurements or a hash value of concatenated measurements.

10. The first device of claim 9, wherein the at least one hardware processor is further configured to verify the consistency of received and obtained measurements.

11. A method comprising at a first device (110) in a set of devices (110, 111...11 n) in a network (100):
measuring (S210), by at least one hardware processor (105) via an interface (106), at least one performance characteristic of a second device (111...11 n) in the set of devices to obtain at least one measurement; and
storing (S270), by the at least one hardware processor, a value derived from the at least one measurement in a blockchain for measurements for the second device.

12. The method of claim 11, wherein the blockchain is maintained by at least the second device.

13. The method of claim 11, wherein the value derived from the at least one measurement is a hash value of the at least one measurement and wherein the method further comprises processing (S260), by least one hardware processor, the at least one measurement to obtain the hash value.

14. Computer program comprising program code instructions executable by a processor for implementing the steps of a method according to any one of claims 11-13.

15. Computer program product which is stored on a non-transitory computer readable medium (101) and comprises program code instructions executable by a processor for implementing the steps of a method according to any one of claims 11-13.
